# EUROPEAN PATENT APPLICATION

(11) **EP 1 098 177 A2**
(43) Date of publication of application: **09.05.2001**
(21) Application number: 00123812.0
(22) Date of filing: 02.11.2000
(51) Int. Cl.: G01G 23/01

(54) **Automatic submultiple and multiple test weight calibration apparatus**

(30) Priority: 05.11.1999 JP 31608699
(71) Applicant: Secretary of Agency of Industrial Science and Technology, Tokyo 100-8921 (JP); Nezu, Yoshiaki, c/o National Research Laboratory of Metrology of Agency of Industrial Science and Technology, Tsukuba-shi, Ibaraki-ken, 305-8563 (JP)
(72) Inventor: Nezu, Yoshiaki, National Research Lab. of Metrolog, Tsukuba-shi,Ibaraki-ken, 305-8563 (JP)
(74) Representative: Reichel, Wolfgang, Dipl.-Ing.

(57) **Abstract**

In order to calibrate test weights through direct submultiple/multiple calibration, the weight exchange, measurements and calculation can be automatically performed based upon a calibration theory under a computer control. An automatic test weight calibration apparatus has a weighing unit, test weights, built-in balancing weights, a measurement control unit, a built-in balancing weight loading/unloading mechanism and an external standard weight - test weight exchange mechanism, and automatically calibrates the test weights by using a built-in balancing weight or weights and an external standard weight.

## Description

### BACKGROUND OF THE INVENTION

### 1. Field of the Invention

The present invention relates to calibration techniques for standard weights which are used for legal metrology, measuring management, accredited calibration system and the like.

### 2. Description of the Related Art

Standard weights include those for inspection (verification) balances in commercial use, those for inspection standards used for certification, those for management in various manufacturers, and those with a verification (with a logo mark JCSS) given by verification authorities.

A weight set is generally of a series of 5, 2, 2, 1, i.e., 2 kg, 2 kg, 5 kg, 10 kg, 20 kg,... those higher than 1 kg, and 500 g, 200 g, 200 g, 100 g, 50 g, 20 g, 20 g, 10 g,..., 10 mg, 5 mg, 2 mg, 2 mg, 1 mg,... those lower than 1 mg. A direct calibration method is generally used by which a 1 kg weight is directly compared with a 1 kg standard weight, a 500 g weight is directly compared with a 500 g standard weight, and so on.

A calibrated standard weight is a higher level standard weight, a calibrated higher level standard weight is a still higher level standard weight, and the final standard weight is a prototype kilogram. The prototype kilogram has a weight of 1 kg. In order to measure a weight different from 1 kg, mass scaling is therefore necessary. To this end, submultiple/multiple calibration for a weight series has been performed. This is called national mass standard establishment. In accordance with the national mass standard establishment, lower level standard weights are calibrated to supply them nationwide. The lower the level of a standard weight, a accuracy (uncertainty) is degraded more by accumulation of measurement errors. A calibrated value of a standard weight changes with time because of abrasion, scratches, contamination or the like. A periodical calibration is therefore necessary.

A higher accuracy of calibration of a standard weight requires highly sophisticated techniques and longer work time. The submultiple/multiple calibration used for national mass standard establishment is a rational calibration method because it is highly accurate, has integrity, and can provide accuracy (uncertainty) evaluation. However, this method is not suitable for practical use because it requires highly sophisticated techniques based upon many experiences. If calibration for various kinds of standard weights can be automated, wide applications and great merits can be presented.

Since the mass of a standard weight changes after a number of uses, a periodical calibration is necessary in order to maintain an error in an allowable tolerance range. The amount of calibration works are increasing recently, and the required accuracy is also becoming high. The needs for submultiple/multiple calibration with a higher accuracy than the direct calibration are increasing. These calibration works require, however, highly sophisticated techniques based on many experiences and long work time. Automatic calibration has been desired to reduce and rationalize calibration works.

The inventor has developed a computer-controlled apparatus capable of automatically performing self-calibration through submultiple/multiple calibration using built-in standard weights and direct calibration of test weights after the self-calibration, both relying upon a calibration theory (refer to Japan Patent No.3005612). For higher accuracy and further rationalization, it is necessary to develop an automatic calibration apparatus capable of directly calibrating test weights through submultiple/multiple calibration.

The submultiple/multiple calibration method requires highly sophisticated techniques basing upon many experiences such as understanding of the calibration theory including calibration uncertainty (accuracy) evaluation, techniques of placing a plurality of weights on weighing pans to minimize corner errors and techniques of handling weights. In addition, there are many problems such as weight handling miss, e.g., using a different weight among weights having the same nominal value. These problems can be solved at a time through calibration automatization.

It is very difficult to realize automatic submultiple/multiple calibration by using weights having a usual shape (a regular cylinder shape or a shape similar to it). The inventor has developed a submultiple/multiple calibration apparatus using built-in standard weights having a ring shape so as to load/unload a weight to and from a weighing pan with a weight loading/unloading apparatus. The most important issue of this development is to realize submultiple/multiple calibration capable of exchanging a weight having a usual shape.

### SUMMARY OF THE INVENTION

It is an object of the invention to provide an automatic submultiple/multiple test weight calibration apparatus having a weighing unit, built-in balancing weights, a measurement control unit, a built-in balancing weight loading/unloading mechanism, a test weight loading/unloading mechanism and an external standard weight - test weight exchange mechanism, for automatically performing submultiple/multiple calibration of test weights by using an external standard weight, wherein: the weighing unit weighs a built-in balancing weight or weights, a test weight or weights, and the external standard weight or test weight, respectively placed on a balancing weight pan, a test weight pan or pans, and an external standard weight - test weight pan; the built-in balancing weight loading/unloading mechanism selectively places the built-in balancing weight or weights on the balancing weight pan; the test weight loading/unloading mechanism selectively places the test weight or weights on the test weight pan or pans; and the external standard weight - test weight exchange mechanism selectively places the external standard weight or test weight on the external standard weight - test weight pan.

### BRIEF DESCRIPTION OF THE DRAWINGS

Fig. 1 is a diagram briefly showing the overall structure of an automatic submultiple/multiple test weight calibration apparatus according to an embodiment of the present invention.
Figs. 2A and 2B are diagrams illustrating the operation principle of a built-in balancing weight loading/unloading mechanism of the automatic submultiple/multiple test weight calibration apparatus according to the embodiment.
Figs. 3A and 3B are diagrams showing the structures of test weight pans and a test weight loading/unloading mechanism of the automatic submultiple/multiple test weight calibration apparatus according to the embodiment.
Figs. 4A and 4B are diagrams showing the main structures of the test weight pans and test weight loading/unloading mechanism of the automatic submultiple/multiple test weight calibration apparatus according to the embodiment.

### DETAILED DESCRIPTION OF THE PREFERRED EMBODIMENTS

An automatic submultiple/multiple test weight calibration apparatus according to an embodiment of the invention will be described with reference to the accompanying drawings.

### (Outline of Apparatus)

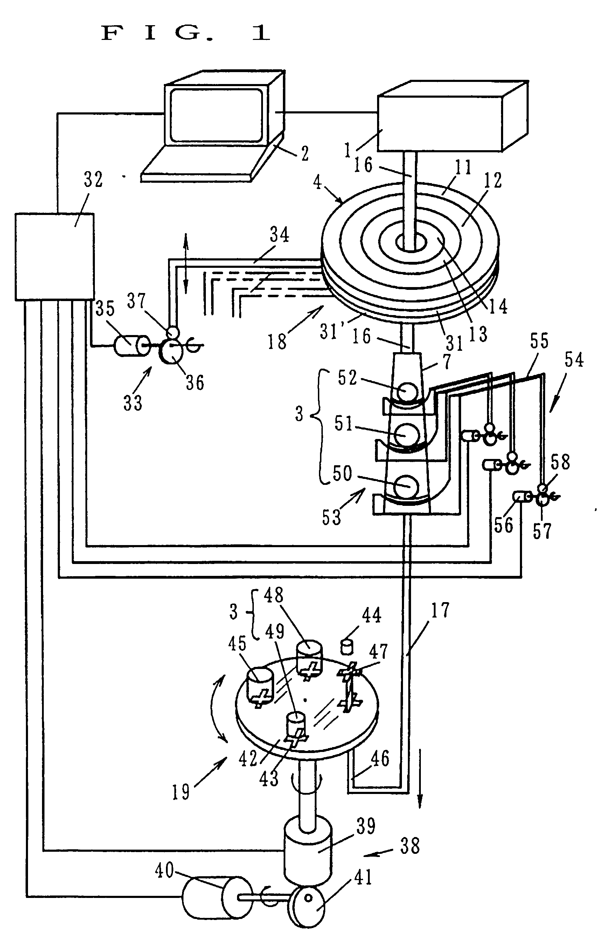

An automatic weight calibration apparatus does not require highly sophisticated techniques basing upon many experiences, understanding of the calibration theory, and long work time, respectively necessary for high accuracy weight calibration. This apparatus automatically calibrates a test weight by using an external 1 kg standard weight. In order to realize this function, as shown in Fig. 1, the apparatus includes as its main parts, a weighing unit 1, a measurement control unit (personal computer) 2, test weights 3, built-in balancing weights 4, a weight loading/unloading mechanism, a weight exchange mechanism and the like.

### (Structure of Apparatus)

### (1) Test Weights and Built-in Balancing Weights

As shown in Table 1, test weights belong to a 5, 2, 2, 1, 1 series. Each test weight has a regular cylinder shape or an OIML type shape. The test weights 3 include: a 1 kg weight 48; a 500 g weight 49; a 200 g weight 50 (a first 200 g weight 200₁ shown in Table 1); a 200 g weight 51 (a second 200 g weight 200₂ shown in Table 1); a 100 g weight 52 (a first 100 g weight 100₁ shown in Table 1); and a 100 g weight 44 (a second 100 g weight 100₂ shown in Table 1). These test weights are placed on an external standard - test weight pan 47 and test weight pans 53.

A desired set of test weights 3 are measured so that they are made standard weights having integrity and being capable of uncertainty evaluation. For example, measurement combinations such as shown in Table 1 are used to perform submultiple calibration. In many cases, only one 100 g weight is used. In such cases, an external standard weight is used in place of the 100 g weight 44 to help evaluate the submultiple calibration results.

Built-in balancing weights 4 belong to a 5, 2, 2, 1 series. Each built-in balancing weight has a ring shape. The built-in balancing weights 4 include: a 500 g weight 11; a 200 g weight 12; a 200 g weight 13; and a 100 g weight 14. These weights 4 are concentrically placed on a balancing weight pan 31. The built-in balancing weights 4 are used to set the total load on the weighing unit 1 to 1 kg during the submultiple calibration measurement of the test weights 3.

The external standard weight - test weight pan 47 and test weight pan 53 for placing thereon an external standard weight and test weights 3 and the balancing weight pan 31 for placing thereon a built-in balancing weight or weights 4 are sequentially fixed to balance beams 16 and 17 which exert a mass load on the weighing unit 1. The mass loads of weights placed on the external standard weight - test weight pan 47, test weight pans 53, and balancing weight pan 31 are measured by the weighing unit 1.

**Table 1**

| Test weights (g) (5, 2, 2, 1, 1 series) | | | | | | | Built-in balancing weights (5, 2, 2, 1 series) | | | |
|---|---|---|---|---|---|---|---|---|---|---|
| 500 | 200₁ | 200₂ | 100₁ | 100₂ | 1000 | Measured value | 500 | 200₁ | 200₂ | 100 |
| + | + | + | + | | - | a1 | | | | |
| + | - | - | - | | | a2 | + | | | |
| + | - | - | | - | | a3 | + | | | |
| | + | - | + | - | | a4 | + | + | | |
| | + | - | - | + | | a5 | + | + | | |
| | + | - | | | | a6 | + | + | | + |
| | + | | - | - | | a7 | + | + | | + |
| | | + | - | - | | a8 | + | + | | + |
| | | | + | - | | a9 | + | + | + | |
| Measured value is a difference between weights + and weights - | | | | | | | Weights + are loaded to set a total weight to 1 kg | | | |

### (2) Weight loading/unloading mechanism and weight exchange mechanism

The automatic submultiple/multiple test weight calibration apparatus of this embodiment includes a test weight loading/unloading mechanism 54, a built-in balancing weight loading/unloading mechanism 18, and an external standard weight - test weight exchange mechanism 19 for exchanging the external standard weights and test weights 44, 45, 48 and 49.

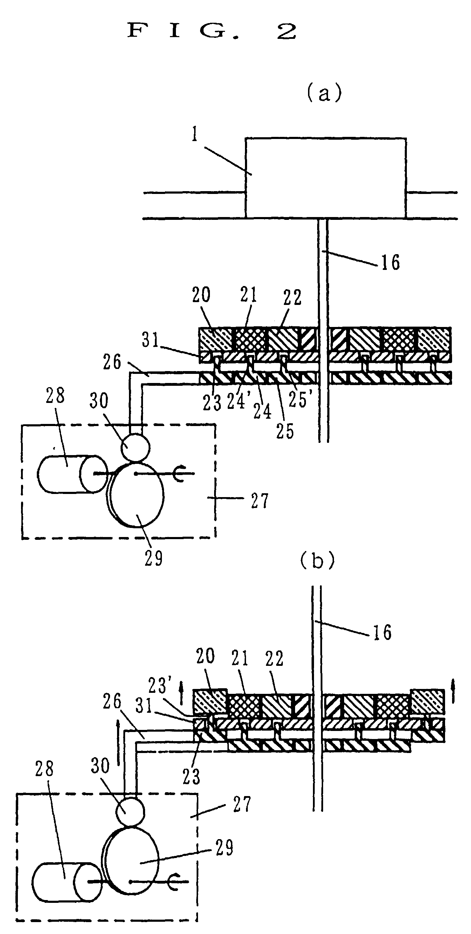

First, the operation principle of the built-in balancing weight loading/unloading mechanism 18 will be described with reference to Figs. 2A and 2B. For description simplification purposes, three concentrical ring weights 20, 21 and 22 are drawn in Figs. 2A and 2B.

Referring to Fig. 2A, three ring-shaped weights 20, 21 and 22 are placed on the balancing weight pan 31. The balancing weight pan 31 is fixed to and supported by the balance beam 16 extending from the weighing unit 1. Three concentrical loading/unloading rings 23, 24 and 25 corresponding to the three built-in ring-shaped weights are disposed independently upward/downward movable under the balancing weight pan 31. A plurality of pins 23', 24' and 25' are integrally formed with the upper surface of the loading/unloading rings along a circumferential direction at some pitch.

Consider now the outer loading/unloading ring 23. An up/down operation arm 26 is integrally fixed to the loading/unloading ring. An up/down drive mechanism 27 is coupled to the lower end of the vertical portion of the up/down operation arm 26. As shown in Figs. 2A and 2B, the up/down drive mechanism 27 is constituted of an eccentric cam 29 to be rotated by a motor 28 and a cam follower 30 in contact with the lower end of the up/down operation arm 26.

As the motor 28 rotates, the up/down drive mechanism 27 is activated to move up and down the up/down operation arm 26. Although the up/down drive mechanism utilizes the cam mechanism, other mechanisms may be used such as a mechanism using male and female screws and a mechanism using a rack and a pinion.

Although not shown in Figs. 2A and 2B, the loading/unloading rings 23, 24 and 25, up/down operation arm 26 and up/down drive mechanism 27 are provided independently for each of the three ring-shaped wrights 20, 21 and 22 to independently move upward and downward the three ring-shaped weights. It is therefore possible to selectively place the three ring-shaped wrights on the balancing weight pan 31 and measure the mass load on the weighing unit 1.

More specifically, in the state shown in Fig. 2A, all the three ring-shaped weights 20, 21 and 22 are placed on the balancing weight pan 31 so that the weighing unit 1 can measure the mass load of the three ring-shaped weights. As the motor 28 rotates and the up/down drive mechanism 27 makes the up/down operation arm 26 move upward, as shown in Fig. 2B, the pins 23' of the loading/unloading ring 23 lift up the outer side ring-shaped weight 20 from the balancing weight pan 31.

In this state, the inner and middle side ring-shaped weights 22 and 21 are placed on the balancing weight pan 31 and the mass load of these two weights are measured by the weighing unit 1. In this manner, a desired combination of built-in balancing weights can be set to measure the mass load for submultiple calibration.

In accordance with the above-described principle, the built-in balancing weight loading/unloading mechanism 18 is realized. Namely, as shown in Fig. 1, under the balancing weight pan 31, for example, the loading/unloading ring 31' (corresponding to the outermost ring-shaped weight 11 among the loading/unloading rings of the loading/unloading mechanism 18) and the up/down operation arm 34 corresponding to the loading/unloading ring 31' are disposed, and to the lower end of the up/down operation arm, the up/down drive mechanism 33 is disposed which is constituted of the motor 35, eccentric cam 36 and cam follower 37.

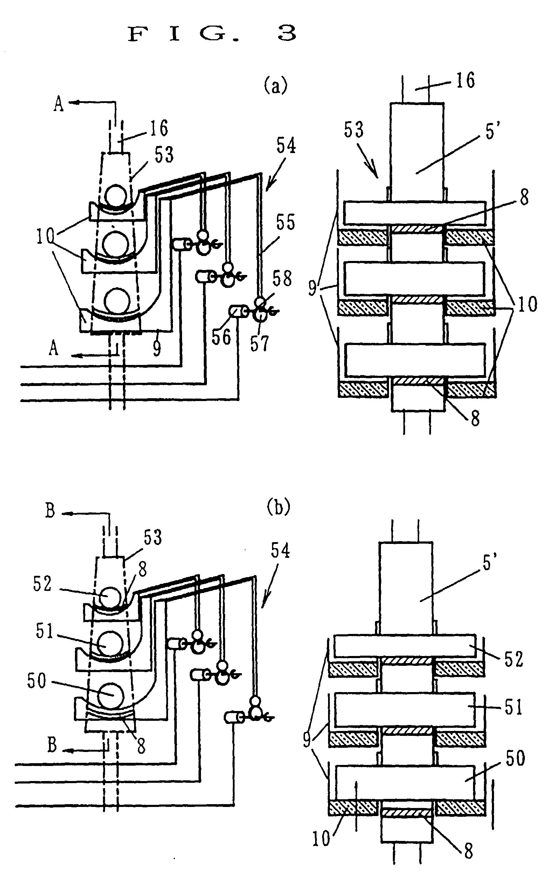

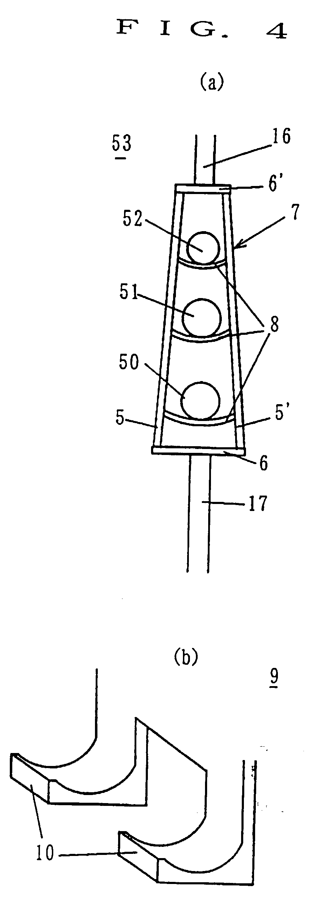

Figs. 3A and 3B are diagrams showing the test weight pans 53 and the test weight loading/unloading mechanism 54, and Figs. 4A and 4B are diagrams showing the main structures of the pans and mechanism. The right side of Fig. 3A is a cross sectional view taken along line A-A shown in the left side, and the right side of Fig. 3B is a cross sectional view taken along line B-B shown in the left side. The test weight pan 53 is mounted on the balance beam 16. The test weight pan 53 includes: a frame 7 having a front plate 5, a back plate 5', a bottom plate 6 and a top plate 6'; and three curved weight pans 8 disposed between the front and back plates 5 and 5'. Three loading/unloading arms 9 are disposed upward and downward movable on the side of the rear plate 5', in correspondence with the three weight pans 8.

The loading/unloading arm 9 has a bifurcated fork portion 10 at its top end, the space between two branches of the fork portion surrounding the weight pan 8. Each of the test weights 50, 51 and 52 is placed on the weight pan 8 for measuring the mass load thereof, whereas it is lifted up from the weight pan 8 by moving upward the fork portion 10 when its mass load is not measured.

Each of the three loading/unloading arms 9 is continuous with an up/down rod 55 whose base end is in contact with a cam follower 58. The cam follower 58 abuts against an eccentric cam 57 which is rotated by a motor 56. With this arrangement, the three loading/unloading arms 9 are selectively moved up and down. The weight pan 8 may be of a comb shape and the loading/unloading arm 9 may have a plurality of fork portions at its end.

Referring back to Fig. 1, the external standard weight - test weight exchange mechanism 19 can be rotated by a motor 39, and has a table 42 which can be moved up and down by an up/down drive mechanism 38 having a motor 40 and an eccentric cam 41. Four through holes 43 of a cross shape are formed through the table 42 at an equal pitch along the circumferential direction. The four weights, including two external standard weights 44 and 45 and two test weights 48 and 49, can be placed on the table 42 at the position corresponding to the through holes 43.

An external standard weight - test weight pan 47 capable of moving up and down through the through hole 43 of the table 42 is mounted on the top of a lower folded portion 46 of the balance beam 17. In the state shown in Fig. 1, as the motor 40 is rotated and the table 42 is lowered by the cam 41, the external standard wright 44 is placed on the external standard weight - test weight pan 47, and the mass load of the external standard weight 44 of 100 g is measured by the weighing unit 1 via the balance beams 16 and 17.

When the external standard weight 45 is to be measured, the table 42 is first moved upward and then the motor 39 is rotated to turn the table 42 until the external standard weight 45 is positioned above the folded portion 46. Thereafter, the table 42 is lowered to place the external standard weight 45 on the external standard - test weight pan 47. In this manner, the test weights 48 and 49 can also be placed on the pan and measured by the weighing unit 1.

### 3) Weighing unit

The weighing unit 1 has an electronic balance having a weighing capacity of 1 kg. The measurement control unit (personal computer) 2 controls the weighing unit 1 to measure weight data.

### 4) Measurement control unit

The main part of the measurement control unit 2 is a control - data calculation unit which is electrically connected to the weighing unit 1 to receive measurement results by the electronic balance of the measurement unit 1. The control - data calculation unit is also electrically connected via a sequencer 32 to the motors 35, 39, 40 and 56 to thereby control the built-in balancing weight loading/unloading mechanism 18, test weight loading/unloading mechanism 54 and external standard weight - test weight exchange mechanism 19. The automatic submultiple/multiple test weight calibration apparatus is controlled by the measurement control unit 2 to perform submultiple calibration of test weights by using the external standard weight 45 of 1 kg to make each test weight a standard weight having integrity with an absolute value.

The calculation results can be displayed, stored, and printed out. A comparison between a test weight and an external standard weight can be made automatically and submultiple calibration can be checked and evaluated. Namely, the functions of an automatic test weight series calibration apparatus can be realized.

### (Operation)

The operation of the automatic weight calibration apparatus will be described by taking as a specific example a calibration work for test weights 3. First, the external standard weight 45 of 1 kg is placed on the table 42 to prepare for the calibration of the test weights 3. The external standard weight - test weight exchange mechanism 19 is operated to place the external standard weight 45 on the external standard weight - test weight pan 47 and measure the mass load thereof by the weighing unit 1.

For the calibration of the test weights 3, first the comparison measurement (direct calibration) is performed between the external standard weight 45 of 1 kg and the test weight 48 of 1 kg, to thereby calibrate the test weight 48 of 1 kg. Next, measurements are made for calculating the values a1 to a9 shown in Table 1. The fundamental measurement process is as follows.

In measuring each of the values a1 to a9, a built-in balancing weight or weights indicated by + are placed on the balancing weight pan 31 by operating the built-in balancing weight loading/unloading mechanism 18. In this state, first, by operating the test weight loading/unloading mechanism 54 and external standard weight - test weight exchange mechanism 19, a test weight or weights indicated by + are measured by the weighing unit 1. Thereafter, a test weight or weights indicated by - are measured by the weighing unit 1 to calculate the difference which is one of the values a1 to a9.

For example, in measuring the value a1, by operating the external standard weight - test weight exchange mechanism 19, the test weight 49 (500 g) is placed on the external standard weight - test weight pan 47, and by operating the test weight loading/unloading mechanism 54, the test weights 50, 51 and 52 (200 g, 200 g, and 100 g) are placed on the test weight pans 53. Then, the mass load of these test weights are measured by the weighing unit 1. After these test weights are dismounted, the test weight 48 of 1 kg is placed on the pan and measured by the weighing unit 1. The value a1 is calculated as the mass load of the test weights 49, 50, 51 and 52 (500 + 200 + 200 + 100 g) - the mass load of the test weight 48 (1 kg).

In measuring the value a2, by operating the built-in weight loading/unloading mechanism 18, the built-in balancing weight of 500 g is placed on the balancing weight pan 31. In this state the test weight of 500 g is measured by the weighing unit 1. Thereafter, the mass load of the test weights of 200 g, 200 g and 100 g is measured by the weighing unit 1. The value a2 is calculated as the mass load of the test weight 49 (500 g) - the mass load of the test weights 50, 51 and 52 (200 + 200 + 100 g).

In accordance with the calibration value of the test weight of 1 kg and the measured values a1 to a9, the measurement control unit (personal computer) 2 performs a calculation process based upon the least square to obtain a calibration value of each test weight and a accuracy (uncertainty) of each calibration value. This calculation process includes not only buoyancy correction but also correction of gravitation gradient caused by a height difference. In this manner, the test weights can be used as standard weights having integrity with an absolute value, by using the external standard weight of 1 kg. By using an external standard weight in place of the second test weight 44 of 100 g, it is possible to check and evaluate submultiple calibration.

If an external standard weight of 100 g is used to scale down the weighing capacity by one digit, submultiple calibration in the order of 10 g can be performed. By scaling down the digit, submultiple calibration to the order of 1 mg becomes possible and standard weights can be set. If an external standard weight of 100 g is used and a combination of measurements for multiple calibration is performed, then multiple calibration is possible so that the weights of 200 g, 500 g and 1 kg can be calibrated. Namely, if the weighing capacity is set to 10 kg, the multiple calibration for test weights of 2 kg, 2 kg, 5 kg and 10 kg becomes possible by using an external standard weight of 1 kg, in the manner similar to submultiple calibration. The apparatus of this embodiment can realize automatic submultiple/multiple calibration.

The above description pertains to submultiple/multiple calibration for a series of test weights. Since the direct calibration between one standard weight and one to three test weights to be exchanged by the external standard weight - test weight exchange mechanism 19 can be performed, each weight can be automatically calibrated.

The automatic weight calibration apparatus of this invention has been described in connection with the preferred embodiment. The invention is not limited only to the above embodiment. It is apparent that various modifications, improvements, combinations, and the like can be made by those skilled in the art without departing from the scope of the appended claims.

The invention with the above-described configuration can present the following advantages. Since high accuracy submultiple calibration for test weights can be automatically performed, high accuracy standard weights can be easily obtained without highly sophisticated techniques. The calibration work is only to place weights on the weight exchange mechanism, reducing a work labor.

Since automatic measurements can be performed, the measurements may be performed during the night with a good measurement environment so that a measurement accuracy can be improved. Calibration facilities such as accredited calibration system authorities are required to use calibrated inspection standards in order to avoid a mass change to be caused by a number of use times of the standards. The apparatus of the invention can use inspection weights as test weights. Accordingly, automatic calibration can be performed at a desired interval and the number of use times of standard weights can be reduced, so that the calibration period at high hierarchical authorities can be prolonged. Further, direct submultiple/multiple calibration can be performed for weights to be calibrated. Therefore, the invention can contribute to man power reduction and rationalization of calibration works, for example, the weights can be calibrated to a accuracy (uncertainty) of the same degree as inspection weights, without lowering the accuracy.

By combining the already developed apparatus (refer to Japan Patent No.3005612), i.e., by using ring-shaped built-in standard weights capable of self-calibration, test weights can be calibrated at a higher accuracy through comparison check or the like.

## Claims

1. An automatic submultiple/multiple test weight calibration apparatus having a weighing unit, built-in balancing weights, a measurement control unit, a built-in balancing weight loading/unloading mechanism, a test weight loading/unloading mechanism and an external standard weight - test weight exchange mechanism, for automatically performing submultiple/multiple calibration of test weights by using an external standard weight, wherein:
said weighing unit weighs a built-in balancing weight or weights, a test weight or weights, and the external standard weight or test weight, respectively placed on a balancing weight pan, a test weight pan or pans, and an external standard weight - test weight pan;
said built-in balancing weight loading/unloading mechanism selectively places the built-in balancing weight or weights on the balancing weight pan;
said test weight loading/unloading mechanism selectively places the test weight or weights on the test weight pan or pans; and
said external standard weight - test weight exchange mechanism selectively places the external standard weight or test weight on the external standard weight - test weight pan.

2. An automatic submultiple/multiple test weight calibration apparatus, according claim 1, wherein said test weight pan is mounted on the balance beam, said test weight pan includes curved weight pans, loading/unloading arms are disposed upward and downward movable in correspondence with said curved weight pans, said loading/unloading arm has a bifurcated fork portion at its top end, the space between two branches of the fork portion surrounding said curved weight pan, each of said test weights is placed on said curved weight pan for measuring the mass load thereof, whereas it is lifted up from said curved weight pan by moving upward the fork portion when its mass load is not measured.

3. An automatic submultiple/multiple test weight calibration apparatus, according claim 1, wherein said test weight pan is mounted on the balance beam, said test weight pan includes curved weight pans, loading/unloading arms are disposed upward and downward movable in correspondence with said curved weight pans, said loading/unloading arm has a bifurcated fork portion at its top end, the space between two branches of the fork portion surrounding said curved weight pan, each of said test weights is placed on said curved weight pan for measuring the mass load thereof, whereas it is lifted up from said curved weight pan by moving upward the fork portion when its mass load is not measured, each of said loading/unloading arms is continuous with an up/down rod whose base end is in contact with a cam follower, said cam follower abuts against an eccentric cam which is rotated by a motor, with this arrangement, the loading/unloading arms are selectively moved up and down, said curved weight pan is of a comb shape and said loading/unloading arm have a plurality of fork portions at its end.
